# EUROPÄISCHE PATENTSCHRIFT

(11) **EP 1 982 495 B1**
(45) Veröffentlichungstag und Bekanntmachung des Hinweises auf die Patenterteilung: **03.10.2012**
(21) Anmeldenummer: 07704261.2
(22) Anmeldetag: 31.01.2007
(51) Int. Cl.: H04L 29/06

(54) **VERFAHREN ZUM SICHERN DER AUTHENTIZITÄT VON NACHRICHTEN, DIE GEMÄSS EINEM MOBILE INTERNET PROTOKOLL AUSGETAUSCHT WERDEN**
METHOD FOR VERIFYING THE AUTHENTICITY OF MESSAGES EXCHANGED ACCORDING TO A MOBILE INTERNET PROTOCOL
PROCÉDÉ POUR VÉRIFIER L'AUTHENTICITÉ DE MESSAGES ÉCHANGÉS SELON UN PROTOCOLE INTERNET MOBILE

(30) Priorität: 09.02.2006 DE 102006006072
(43) Veröffentlichungstag der Anmeldung: 22.10.2008
(73) Patentinhaber: SIEMENS AKTIENGESELLSCHAFT, 80333 München (DE)
(72) Erfinder: BÜCKER, Wolfgang, 85579 Neubiberg (DE); GRÖTING, Wolfgang, 46149 Oberhausen (DE); KROSS, Joachim, 81377 München (DE)
(86) Internationale Anmeldenummer: PCT/EP2007/050936
(87) Internationale Veröffentlichungsnummer: WO 2007/090774

(56) Entgegenhaltungen:
- EP-A1- 1 414 212
- WO-A-00/02407
- WO-A-2005/036813
- "Project Number 3-0238, proposed creation of a new TIA Standard, Generic Bootstrapping Architecture (GBA) Framework, (if approved, to be published as TIA-1098)" EIA/TIA DRAFTS, TELECOMMUNICATIONS INDUSTRY ASSOCIATION, ARLINGTON, VA, US, 14. Dezember 2005 (2005-12-14), XP017005482

## Beschreibung

Die Erfindung betrifft ein Verfahren zum Sichern der Authentizität von Nachrichten, die zwischen einer Mobile Node und einem Home Agent gemäß einem Mobile Internet Protokoll ausgetauscht werden.

Das Internet Protokoll IPv4 wurde für leitungsgebundene Kommunikation mit ortsfesten Rechnern und Vermittlungsknoten entwickelt. Um mobilen Geräten, wie z.B. Laptops und PDAs (Personal Digital Assistent) einen Wechsel von einem Rechnernetz in ein anderes zu ermöglichen und dabei gleichzeitig eine feste IP-Adresse zu behalten, wurde von der "Internet Engineering Task Force" (IETF) das Netzwerkprotokoll "IP Mobility Support for IPv4", kurz "Mobile-IP", entworfen. Mobile-IP ist in dem "Request For Comments" (RFC) 3344 beschrieben und ist gilt as Standard für Internetverbindungen mit mobilen Teilnehmern.

Beim Mobile-IP bezeichnet eine "Mobile Node" einen Rechner oder Router der seinen Zugang von einem Netzwerk zu einem anderen Netzwerk ändert. Mit "Home Agent" werden Router bezeichnet, die an das Heimatnetz der Mobile Node angeschlossen sind und die Standortinformationen der Mobile Node verwalten. Ein "Foreign Agent" ist ein Router, der für die Mobile Node die Routing Services zum fremden Netz zur Verfügung stellt und die Weiterleitung von Datenpaketen vom Home Agent zum Mobile Agent übernimmt.

Entdeckt eine Mobile Node, dass sie an ein fremdes Netz angeschlossen wurde, fordert sie eine "Care of Address" im fremden Netzwerk an. Die Care of Address wird aus den Advertisements des Foreign Agent (Foreign Agent Care of Address) oder via DHCP (Co Located Care of Address) ermittelt. Die Mobile Node registriert sich mit der neuen Care of Address bei ihrem Home Agent. Die beim Home Agent ankommenden Datenpakete werden dann mittels IP to IP Kapselung an den Mobile Host weitersendet. Nach der Rückkehr in das Heimatnetz nimmt die Mobile Node zu ihrem Home Agent Kontakt auf und registriert sich dort.

Bei der Verwendung eines Foreign Agents sind für die Registration folgende Schritte notwendig: Die Mobile Node übermittelt einen "Registration Request" mit der Adresse ihres Home Agents an den Foreign Agent. Dieser leitet den Registration Request an den Home Agent weiter. Danach sendet der Home Agent einen "Registration Reply" an den Foreign Agent, der die Registration entweder akzeptiert oder zurückweist. Abschließend übergibt der Foreign Agent den Registration Reply an die Mobile Node. Ohne Foreign Agent sind für die Registration nur zwei Schritte erforderlich: Zuerst sendet die Mobile Node einen Registration Request an den Home Agent. Anschließend antwortet der Home Agent mit einem Registration Reply an die Mobile Node.

Da die Mobile Node dem Home Agent in dem Registration Request ihre aktuelle Care of Address, das heißt, die Adresse unter welcher sie in dem fremden Netz zu erreichen ist, mitteilt, muss dieser vor Manipulationen'geschützt werden. Würde z.B. ein Angreifer die Care of Address in dem Registration Request verändern, so sendet der Home Agent sämtliche Datenpakete nicht mehr an die Mobile Node, sondern an die von dem Angreifer bestimmte Adresse. Die Authentizität der Registrationsnachrichten muss gewährleistet werden, sie dürfen weder inhaltlich verändert werden, noch deren Absender gefälscht werden.

Zum Schutz der Authentizität sind beim Mobile-IP so genannte "Mobility Security Associations" (MSA) zwischen je zwei Kommunikationspartnern vorgesehen. Die Kommunikationspartner sind meistens der Home Agent und die Mobile Node, wobei auch Mobility Security Associations zwischen Foreign Agent und Home Agents bzw. zwischen Foreign Agent und Mobile Node existieren. Zwischen den Kommunikationspartnern können in jede Richtung mehrere unterschiedliche Mobility Security Associations bestehen, wobei in der Praxis nur eine einzige Mobility Security Association für beide Richtungen benutzt wird. Mobility Security Associations MSA sind Sammlungen von Sicherheitsbeziehungen zwischen den Kommunikationspartnern und geben an, welches kryptographisches Verfahren und welcher Schlüssel zum Schutz der Authentizität benutzt werden sollen. Die einzelnen Sicherheitsbeziehungen einer Mobile Security Association werden durch einen "Security Parameter Index" (SPI) gekennzeichnet.

Die kryptographischen Verfahren der Sicherheitsbeziehungen umfassen je einen Authentifizierungsalgorithmus und einen "Replay Protection Style".

Als Standardauthentifizierungsalgorithmus ist HMAC-MD5 vorgesehen, welcher auf Basis des MD5 Algorithmus einen "Message Authentication Code" (MAC), dass heißt einen Hash-Wert mit einem geheimen Schlüssel über die zu schützende Nachricht berechnet. Wird die Nachricht verändert oder ein anderer Schlüssel benutzt, so ändert sich bei einer Neuberechnung der Message Authentication Code MAC und Manipulationen bzw. Absenderfälschungen können nachgewiesen werden. Außer HMAC-MD5 können auch andere Authentifizierungsalgorithmen eingesetzt werden.

Replay Protection dient zum Schutz vor Wiedereinspielen von alten Registration Requests. Bei Replay Protection mit Zeitstempeln wird vom Sender die Uhrzeit in die Nachricht eingefügt und vom Empfänger überprüft, dass die Nachricht nicht älter als eine vorgegebene Zeit ist. Bei Replay Protection mit "Noncen" (Number used only once) wird vom Sender in jeder Nachricht an den Empfänger eine neue Zufallszahl eingefügt. Der Sender überprüft dann, ob der Empfänger die gleiche Zahl in seiner nächsten Botschaft an den Sender einfügt. Auch andere Replay Protection Styles können eingesetzt werden. Die Zeitstempel und Noncen bzw. die von anderen Replay Protection Styles erzeugten Werte werden vom Sender in ein Identifikationsfeld der Registrationsnachrichten eingetragen und vom Empfänger überprüft.

Um eine Nachricht authentifizieren zu können, sieht Mobil-IPv4 for, dass der Sender eine "Authentication Extension" an die Nachricht anhängt, welche den Security Parameters Index SPI und den Message Authentication Code MAC über die zu schützenden Teile der Nachricht umfasst. Eine Authentication Extension zwischen Mobile Node und Home Agent wird mit "Mobile Home Authentication Extension" (MHAE) bezeichnet. Der Empfänger prüft die Authentizität, indem er auf die durch den Security Parameters Index SPI identifizierte Mobility Security Association MSA zugreift und aus ihr den zu benutzenden Authentifizierungsalgorithmus und Replay Protection Style bestimmt. Danach berechnet der Empfänger den Message Authentication Code MAC und verifiziert, dass das erhaltene Ergebnis mit dem Message Authentication Code MAC in der empfangenen Nachricht übereinstimmt. Zum Schutz vor Wiedereinspielungen alter Nachrichten werden auch die Replay Protection Style Werte im Identifikationsfeld der Registrationsnachrichten überprüft.

Da bei Mobile-IP verschiedene Authentifizierungsalgorithmen und Replay Protection Styles eingesetzt werden können, müssen sich die Kommunikationspartner über den zu benutzenden Authentifizierungsalgorithmus und Replay Protection Style einigen.

Eine Möglichkeit dazu besteht darin, den zu benutzenden Authentifizierungsalgorithmus und Replay Protection Style vorab festzulegen und die Mobile Node und den Home Agent entsprechend zu konfigurieren. Diese Vorgehensweise hat jedoch folgende Nachteile: In einem großen Netzwerk mit vielen Mobile Nodes und mehreren Home Agents ist ein manuelles Konfigurieren aller Kommunikationspartner sehr aufwändig. Dies gilt sowohl für die Erstkonfiguration als auch für den Fall, dass Schwächen in dem konfigurierten kryptographischen Verfahren entdeckt werden und dieses in allen Kommunikationspartnern ersetzt werden muss. Weiter ist es nicht möglich, falls die von der Mobile Node bzw. dem Home Agent unterstützten kryptographischen Verfahren unbekannt sind, z.B. beim Roaming in 3GPP (Third Generation Partnership Project) WLANs (Wireless local area network), in kurzer Zeit die unterstützten kryptographischen Verfahren beider Kommunikationspartner zu ermitteln, einen geeigneten gemeinsamen Authentifizierungsalgorithmus und Replay Protection Style zu bestimmen und die beiden Kommunikationspartner entsprechend zu konfigurieren.

Eine Verbesserung dieser Nachteile besteht darin, dass die von den Kommunikationspartnern zu benutzenden kryptographischen Verfahren vom Netzwerk ausgewählt werden. In dem RFC 3957 "Authentication, Authorization and Accounting (AAA) Registration Keys for Mobile IPv4" werden die Mobility Security Associations MSA zwischen der Mobile Node und ihrem Home Agent bzw. dem Foreign Agent aus der "AAA Security Association" zwischen der Mobile Node und ihrem Home AAA Server abgeleitet. Der Authentifizierungsalgorithmus und Replay Protection Style werden in einer "Key Generation Extension" der Registrationsnachrichten vom Home AAA Server an die Mobile Node und den Home Agent übertragen. Ein ähnliches Verfahren mit einem Diameter AAA Server ist im RFC 4004 "Diameter Mobile IPv4 Application" beschrieben. Diese Verfahren erlauben es, dem Netzwerk das kryptographische Verfahren zu bestimmen. Nachteilig ist jedoch, dass dem Netzwerk im Allgemeinen nicht bekannt ist, welche Authentifizierungsalgorithmen und Replay Protection Styles von der Mobile Node unterstützt werden. So kann z.B. eine ältere Mobile Node, die nicht das neueste von Netzwerk vorgeschriebene kryptographische Verfahren unterstützt, nicht mit diesem kommunizieren, obwohl die Mobile Node vielleicht ein älteres, vom Netzwerk dennoch als sicher akzeptiertes Verfahren unterstützt.

Eine weitere Verbesserung dieser Situation besteht darin, die kryptographischen Verfahren nicht einseitig zu bestimmen, sondern zwischen den Kommunikationspartnern auszuhandeln. Aus dem RFC 3329 "Security Mechanism Agreement for the Session Initiation Protocol (SIP)" ist ein Verfahren bekannt, bei dem ein Client eine Liste von unterstützen kryptographischen Verfahren an einen Server sendet. Daraufhin sendet der Server eine Challenge mit einer Liste der von ihm unterstützten kryptographischen Verfahren an den Client. Der Client wählt aus den gemeinsamen Verfahren das Verfahren mit der höchsten Präferenz aus. Um zu vermeiden, dass ein Angreifer die Listen modifiziert und so z.B. vortäuscht, dass vom Server nur kryptographisch schwache Verfahren unterstützt werden und die Kommunikationspartner sich anschließend auf ein entsprechend schwaches Verfahren einigen, muss die Liste noch einmal geschützt übertragen werden. Der Client aktiviert daher das ausgewählte kryptographische Verfahren und schickt die Liste mit den von Server unterstützten Verfahren an den Server. Der Server prüft die Authentizität der Liste um sicherzustellen, dass die ursprüngliche Liste nicht modifiziert wurde. Ein weiterer Aushandlungsmechanismus ist aus dem "Internet Key Exchange" (IKE, IPsec-IKE) bekannt. Nachteilig bei diesen Verfahren ist jedoch, dass sie nicht für Mobile-IP eingesetzt werden können, da die erste Nachricht ungeschützt übertragen wird, Mobile-IP aber einen Authentizitätsschutz von bereits der ersten übertragenen Nachricht fordert. Ein weiterer Nachteil ist, dass die Liste mit den unterstützten kryptographischen Verfahren zweimal übertragen werden muss.

Aus der WO 2005/036813 A1 ist ein Authentifizierverfahren für ein Mobile IPv6 Protokoll bekannt, bei dem eine Mobile Node einen Registration Request, der Authentifikationsinformationen beinhaltet, an einen Home Agent übermittelt. In einem SPI (Security Parameter Index) Feld wird die Security Association angegeben, mit der die Botschaft authentifiziert wird. Ein Authenticator Field enthält die Informationen, die notwendig sind, um eine Mobile Node zu authentifizieren.

Aus der WO 00/02407 ist ein Authentifizierverfahren in einem Mobile IP Netzwerk bekannt, bei dem eine Mobile Node einen Registration Request an einen Home Agent HA schickt. Der Registration Request umfasst einen Authentikator und eine Data Unit mit Informationen, wie der Authentifikator berechnet wird. Über eine Mobility Security Association können die Algorithmen, der Schlüssel und die Replay-Schutzmechanismen, die für die Authentifizierung benutzt werden, festgelegt werden.

Aus der EP 1414212 A1 ist ein Verfahren zum Authentifizieren von mobilen Benutzern UE in einem Internetprotokoll Multimedia Subsystem beschrieben, bei dem ein nicht authentifizierter Benutzer UE nach Auswahl eines Authentifikationsmechanismus authentifiziert wird. Die Auswahl des Authentifikationsmechanismus kann entweder anhand von Informationen in einem von dem Benutzer UE abgesendeten Requests AUI oder auch anhand eines, mit dem Benutzer verbunden Authentification Profile AUP, vorgenommen werden. Der Request enthält dabei Informationen, welche Authentifikationsmechanismen unterstützt werden. Die auszuwählenden Authentifikationsmechanismen können z. B. AKA (Authentication and Key Agreement), wie sie in SIM-Karten eingesetzt werden oder die des Internets, wie z. B. HTTP sein.

Es ist daher Aufgabe der Erfindung, ein Verfahren anzugeben, in welchem sich eine Mobile Node und ein Home Agent bzw. ein Foreign Agent über die gegenseitig unterstützten kryptographischen Verfahren informieren, ein gemeinsam unterstütztes kryptographischen Verfahren ausgewählt wird, und die Authentizität von Nachrichten, die zwischen Mobile Node und Home Agent bzw. Foreign Agent ausgetauscht werden, gemäß einem Mobile Internet Protokollgewährleistet wird.

Diese Aufgabe wird erfindungsgemäß durch das Verfahren nach Anspruch 1 zum Sichern der Authentizität von Nachrichten, die zwischen einer Mobile Node und einem Home Agent gemäß einem Mobile Internet Protokoll ausgetauscht werden gelöst, wobei die zum Sichern der Authentizität der Nachrichten eingesetzten kryptographischen Verfahren zwischen der Mobile Node und dem Home Agent vereinbart werden.

Dadurch, dass die kryptographischen Verfahren nicht vorab bestimmt und konfiguriert werden, ist es möglich, große Netzwerke mit den unterschiedlichsten, von Mobile Nodes und Home Agents unterstützten, kryptographischen Verfahren dynamisch und effizient zu konfigurieren. Weiter kann für jede Message Security Association das jeweils optimale kryptographische Verfahren ausgewählt werden, d.h. einerseits kann das stärkste, von beiden Kommunikationspartnern gemeinsam unterstützte kryptographische Verfahren eingesetzt werden und andererseits kann auf schwächere kryptographische Verfahren zurückgegriffen werden, falls ein stärkeres Verfahren nicht von beiden Kommunikationspartnern gemeinsam unterstützt wird. Des weiteren lassen sich durch das erfindungsgemäße Verfahren kompromittierte kryptographische Verfahren ohne großen Aufwand ersetzen.

Gemäß einer Weiterbildung ist das Mobile Internet Protokoll das Mobile-IPv4 Protokoll.

In einer Weiterbildung erstellt die Mobile Node einen Registration Request, der Informationen über die von der Mobile Node unterstützten kryptographischen Verfahren enthält. Die Mobile Node sichert dann die Authentizität des Registration Requests mit Hilfe eines ersten kryptographischen Verfahrens. Anschließend sendet die Mobile Node den authentizitätsgesicherten Registration Request an den Home Agent und der Home Agent überprüft die Authentizität des Registration Requests.

Im Unterschied zum Mobile-IP gemäß RFC 3344 enthält der von der Mobile Node erstellte Registration Request Information über die von der Mobile Node unterstützten kryptographischen Verfahren, so dass diese dem Home Agent bekannt gemacht werden. Weiter wird die Authentizität von bereits des ersten Registration Requests, so wie von Mobile-IP gefordert, gesichert, so dass auch festgestellt werden kann, ob die Information über die von der Mobile Node unterstützten kryptographischen Verfahren verfälscht wurden oder der Registration Request aus einer anderen Quelle stammt.

In einer Weiterbildung sendet der Home Agent einen Registration Reply an die Mobile Node, in welchem der Registration Request zurückgewiesen wird, falls der Home Agent den Registration Request für nicht authentisch befindet.

Sollte entweder der Inhalt des Registration Requests oder der Absender manipuliert worden sein, oder eine Wiedereinspielung vorliegen, so erlaubt der Home Agent keine Registration der Mobile Node.

In einer Weiterbildung, falls der Home Agent die Authentizität des Registration Request feststellt, wählt der Home Agent ein weiteres, von der Mobile Node und dem Home Agent gemeinsam unterstütztes, kryptographisches Verfahren aus und sendet einen Registration Reply an die Mobile Node, in welchem er der Mobile Node die Auswahl des weiteren, gemeinsam unterstützten, kryptographischen Verfahrens mitteilt.

Der Home Agent kann also nicht nur ein kryptographisches Verfahren bestimmen, sondern falls mehrere, derartige gemeinsam unterstützte, kryptographische Verfahren zur Verfügung stehen ein bevorzugtes Verfahren auswählen.

In einer Weiterbildung enthält der Registration Reply Information über die von dem Home Agent unterstützten kryptographischen'Verfahren.

Mit Hilfe der Informationen über die vom Home Agent unterstützten kryptographischen Verfahren ist es der Mobile Node möglich, bei einem erneuten Registration Request eines dieser Verfahren als erstes, von der Mobile Node und dem Home Agent gemeinsam unterstütztes kryptographisches Verfahren zum Sichern der Authentizität des Registration Requests einzusetzen.

In einer Weiterbildung sichert der Home Agent die Authentizität des Registration Replys mit Hilfe des von ihm ausgewählten kryptographischen Verfahren.

Auf diese Weise wird der Inhalt und der Absender des Registration Replys vor Manipulation geschützt, so dass ein Angreifer die Information über die unterstützten kryptographischen Verfahren nicht zu seinen Gunsten verändern kann, in dem er z. B. nur die Unterstützung von kryptographisch schwachen Verfahren vorgibt.

In einer Weiterbildung überprüft die Mobile Node die Authentizität des Registration Replys.

Durch das Überprüfen der Authentizität des Registration Replys kann die Mobile Node sicher sein, dass die im Registration Reply genannten kryptographischen Verfahren nicht von einem Dritten manipuliert oder ausgewählt wurden, sondern unverändert sind und vom Home Agent stammen.

In einer Weiterbildung registriert der Home Agent die Mobile Node, falls die Authentizität des Registration Requests festgestellt werden konnte, wobei der Registration Reply des Home Agents den Erfolg der Registration der Mobile Node anzeigt und mindestens eine Message Security Association zwischen der Mobile Node und dem Home Agent mit dem ausgewählten kryptographischen Verfahren aufgebaut wird.

Mit dem Austausch von nur zwei Nachrichten lassen sich mit dem erfindungsgemäßen Verfahren authentizitätsgesicherte Informationen über die unterstützten kryptographischen Verfahren austauschen, das optimale kryptographische Verfahren auswählen und entsprechende Message Security Associations aufbauen.

In einer Weiterbildung wählt der Home Agent als weiteres gemeinsames kryptographisches Verfahren das erste kryptographisches Verfahren aus, falls der Home Agent kein weiteres, gemeinsam unterstütztes kryptographisches Verfahren zwischen dem Home Agent und der Mobile Node auswählen kann.

In einer Weiterbildung wählt die Mobile Node anhand der Informationen im Registration Reply ein weiteres, gemeinsam von der Mobile Node und dem Home Agent unterstütztes kryptographisches Verfahren aus und baut damit mindestens eine Message Security Association zwischen der Mobile Node und dem Home Agent auf.

In einer Weiterbildung wird das weitere, von der Mobile Node und dem Home Agent gemeinsam unterstützte kryptographische Verfahren von diesen zum Sichern der Authentizität des weiteren Nachrichtenaustausch zwischen der Mobile Node und dem Home Agent eingesetzt.

Das gemeinsam unterstützte kryptographische Verfahren stellt dabei das bevorzugte Verfahren dar. Zum einen kann die Auswahl mit Blick auf die kryptographische Sicherheit des Verfahrens geschehen, zum anderen kann auch ein kryptographisch schwächeres Verfahren ausgewählt werden, welches aber eine gesicherte Kommunikation zwischen der Mobile Node und dem Home Agent überhaupt erst ermöglicht.

In einer Weiterbildung umfasst das erste und die weiteren kryptographischen Verfahren Message Authentication Codes (MAC) und Replay Protection Styles.

Mit Hilfe der Message Authentication Codes wird gewährleistet, dass der Registration Request bzw. der Registration Reply und die drin enthaltenen Informationen über die unterstützten kryptographischen Verfahren nicht manipuliert wurden und dass die Identität, das heißt die Quell- und Zieladresse nicht verändert wurden. Mit Hilfe der Replay Protection Styles, die z.B. Zeitstempel oder Noncen sein können, wird sichergestellt, dass ein Registration Reply dem zugehörigen Registration Request zugeordnet und ein Wiedereinspielen von alten Registrationsnachrichten vermieden wird.

In einer Weiterbildung wird der Registration Request und/oder der Registration Reply im Klartext übertragen.

Auf diese Weise ist es möglich, dass der Home Agent die im Registration Request enthaltenen, von der Mobile Node unterstützten kryptographischen Verfahren lesen und die Mobile Node aus dem Registration Reply die von dem Home Agent unterstützten Verfahren entnehmen kann.

In einer Weiterbildung enthält der Registration Request und/oder der Registration Reply einen Hinweis über das erste kryptographische Verfahren.

Da der Registration Request bzw. der Registration Reply im Klartext übertragen werden, kann durch Hinzufügen eines Hinweises darüber, welches erste kryptographische Verfahren zur Authentizitätssicherung eingesetzt wurde, dem Mobile Node bzw. dem Home Agent mitgeteilt werden, mit welchen Authentifizierungsalgorithmus, Replay Protection Style und Schlüssel die Authentizität der Nachricht gesichert wurde und überprüft werden kann.

In einer Weiterbildung ist das erste kryptographische Verfahren aus einem vorhergehenden Datenaustausch zwischen der Mobile Node und dem Home Agent bekannt.

Das erste kryptographische Verfahren kann aus vorhergehenden Vereinbarungen oder Aushandlungen, wie z.B. Registration Requests und Registration Replys, bekannt sein oder von anderen Home Agents aus dem gleichen Netzwerk oder von Home Agents, die ähnliche, bzw. identische bevorzugte Algorithmen und Replay Protection Styles aufweisen, übernommen werden. Auf diese Weise ist es wahrscheinlich, dass der erste Registration Request nicht wegen einem unbekannten Authentifizierungsalgorithmus oder Replay Protection Styles zurückgewiesen wird.

In einer Weiterbildung verfügen die Mobile Node und der Home Agent über einen gemeinsamen geheimen Schlüssel.

Durch den geheimen Schlüssel, der in die Berechnung der Message Authentication Code anhand des Authentifizierungsalgorithmus eingeht, wird sichergestellt, dass ein derartiger Code nur von der zugehörigen Mobile Node bzw. dem zugehörigen Home Agent berechnet werden kann.

In einer Weiterbildung wird das erfindungsgemäße Verfahren mit einer Mobile Node und einem Foreign Agent anstelle mit einer Mobile Node und einem Home Agent ausgeführt.

In einer Weiterbildung wird das erfindungsgemäße Verfahren mit einem Foreign Agent und einem Home Agent anstelle mit einer Mobile Node und einem Home Agent ausgeführt.

Auf diese Weise kann mit dem erfindungsgemäßem Verfahren auch die Authentizität von Nachrichten, die zwischen einer Mobile Node und einem Foreign Agent bzw. einem Foreign Agent und dem Home Agent ausgetauscht werden, gesichert werden.

Die Erfindung wird nachfolgend an einem Ausführungsbeispiel anhand der Zeichnungen näher erläutert.

Es zeigen:
- Figur 1: ein Flussdiagramm eines Ausführungsbeispiels zum erfindungsgemäßen Vereinbaren von kryptographischen Verfahren zwischen einer Mobile Node und einem Home Agent, und
- Figur 2: eine Ausführungsbeispiel der Felder eines erfindungsgemäßen Regristration Requests.

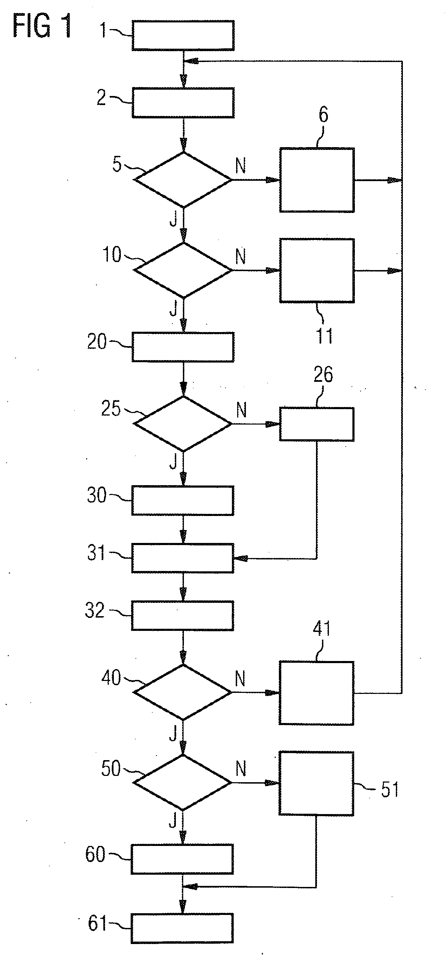

Figur 1 zeigt ein Flussdiagramm eines Ausführungsbeispiels zum erfindungsgemäßen Vereinbaren von kryptographischen Verfahren zum Sichern der Authentizität von Nachrichten, die zwischen einer Mobile Node und einem Home Agent gemäß dem Mobile-IPv4 ausgetauscht werden. Das kryptographische Verfahren zum Sichern der Authentizität besteht aus einem Authentifizierungsalgorithmus und einem Replay Protection Style. Der Authentifizierungsalgorithmus ist z.B. HMAC-MD5, bei dem mit einem 128 Bit langen symmetrischen Schlüssel ein Message Authentication Code berechnet wird. Die Schlüssel können z.B. gemäß RFC 3957 ausgetauscht werden oder im Kontext eines 3GPP-Netzwerkes mittels eines Verfahrens, das auf einer "Generic bootstrapping architecture" (GBA) basiert. Als Replay Protection Style können Zeitstempel (time stamps) eingesetzt werden, wie sie in Mobile-IP vorgeschrieben sind, oder Noncen sein. Selbstverständlich lassen sich auch andere Verfahren zum Schützen der Authentizität der Nachrichten einsetzen.

Das erfindungsgemäße Verfahren lässt sich auch zum Sichern der Authentizität von Nachrichten einsetzen, die zwischen einer Mobile Node und einem Foreign Agent bzw. zwischen einem Home Agent und einem Foreign Agent ausgetauscht werden. In diesem Falle wäre es erforderliche, die "Foreign Home Authentication Extension" (FHAE), bzw. die "Mobile Foreign Authentication Extension" (MFAE), wie vom Mobile-IP vorgeschrieben an die Foreign Mobile Authentication Extension FMAE anzufügen. Das erfindungsgemäße Verfahren kann auch in einem anderen Kontext als Mobile-IP eingesetzt werden, um kryptographische Verfahren zum Sichern der Authentizität von Nachrichten auszuhandeln. Einzelne Schritte des Flussdiagramms können an andere Stellen verschoben, ergänzt oder weggelassen werden.

In Schritt 1 fangen die Mobile Node und der Home Agent an, Message Security Associations aufzubauen. Es wird in der Erfindung davon ausgegangen, dass alle dafür erforderlichen Informationen, wie z.B. der geheime Schlüssel, bereits vorhanden sind und für das Vervollständigen der Message Security Associations nur noch die gemeinsamen kryptographischen Verfahren, das heißt, der Authentifizierungsalgorithmus und der Replay Protection Style erforderlich sind.

In Schritt 2 erstellt die Mobile Node einen Registration Request, der Informationen über die von der Mobile Node unterstützten kryptographischen Verfahren enthält. Weiter sichert die Mobile Node die Authentizität des Registration Requests mit einem ersten kryptographischen Verfahren. Dises Verfahren wird von der Mobile Node so gewählt, dass es wahrscheinlich ist, dass es von dem Home Agent unterstützt wird. Dies kann z.B. anhand von Informationen aus vorherigen Verhandlungen mit dem Home Agent oder mit anderen Home Agents in dem gleichen Netz, welche ähnliche oder identische kryptographische Verfahren aufweisen, geschehen. Da der authentizitätsgesicherte Registration Request von der Mobile Node im Klartext an den Home Agent geschickt wird, ist es möglich, einen Hinweis in dem Registration Request aufzunehmen, aus dem der Home Agent entnehmen kann, welches erste kryptographische Verfahren zur Authentizitätssicherung eingesetzt wurde.

In der Abfrage von Schritt 5 prüft der Home Agent, ob er das erste kryptographische Verfahren unterstützt. Falls dies nicht der Fall ist, kann der Home Agent die Authentizität des Registration Requests nicht überprüfen. Es liegt eine sicherheitskritische Situation vor, da ein Angreifer die Informationen über die von der Mobile Node unterstützten kryptographischen Verfahren zu seinen Gunsten manipulieren könnte und/oder der Home Agent den Absender nicht überprüfen kann.

In Schritt 6 erstellt der Home Agent daher einen Registration Reply, in welchem der Registration Request zurückgewiesen wird. Die Zurückweisung kann dabei eine Fehlermeldung gemäß Mobile-IP oder eine neu definierte Fehlermeldung sein. Der Registration Reply wird mit einem von der Mobile Node und dem Home Agent gemeinsam unterstützten Verfahren authentizitätsgesichert und von dem Home Agent an die Mobile Node geschickt. Der Home Agent kann in dem Registration Reply Informationen über die von ihm unterstützten kryptographischen Verfahren mitschicken, so dass die Mobile Node bei einem erneuten Registration Request in Schritt 2 aus der Liste ein neues, erstes gemeinsam unterstütztes kryptographisches Verfahren auswählen und einen erneuten Registration Request damit schützen kann.

In der Abfrage in Schritt 10 überprüft der Home Agent, ob der Registration Request authentisch ist. Dies ist möglich, da das von dem Mobile Node ausgewählte erste kryptographische Verfahren auch vom Home Agent unterstützt wird.

Falls der Registration Request nicht authentisch ist, bedeutet dies, dass der Registration Request z.B. durch einen Angreifer manipuliert worden ist. In diesem Fall erstellt der Home Agent in Schritt 11 einen Registration Reply, in welchem der Registration Request zurückgewiesen wird. Der Registration Reply enthält die für diesen Fall vorgesehene Mobile-IP Fehlermeldung oder eine neu definierte Fehlermeldung und kann auch Informationen über die von dem Home Agent unterstützten kryptographischen Verfahren beinhalten. Nachdem der Registration Reply mit dem ersten kryptographischen Verfahren von Home Agent authentizitätsgesichert wurde, wird dieser an die Mobile Node geschickt, welche in Schritt 2 erneut versucht, sich zu registrieren.

Falls der Home Agent den Registration Request für authentisch befunden hat, registriert der Home Agent in Schritt 20 die Mobile Node in dem Netzwerk.

In der Abfrage von Schritt 25 vergleicht der Home Agent die Informationen über die von der Mobile Node unterstützten kryptographischen Verfahren mit den eigenen unterstützten Verfahren und bestimmt, ob außer dem ersten kryptographischen Verfahren noch weitere gemeinsame kryptographische Verfahren vorhanden sind. So ist es z.B. möglich, als erstes Verfahren ein relativ schwaches, aber weit verbreitertes Verfahren zum Schützen des Registration Requests auszuwählen, um dann zu überprüfen, ob weitere, kryptographisch stärkere, gemeinsame Verfahren von der Mobile Node und dem Home Agent unterstützt werden.

Falls der Home Agent keine weiteren gemeinsamen kryptographischen Verfahren bestimmen kann, so wählt der Home Agent in Schritt 26 das erste kryptographische Verfahren als weiteres gemeinsames Verfahren aus.

Falls der Home Agent weitere, gemeinsam unterstützte kryptographische Verfahren ermitteln kann, wählt der Home Agent in Schritt 30 das von ihm bevorzugte weitere, gemeinsam unterstützte kryptographische Verfahren aus.

In Schritt 31 vervollständigt der Home Agent die Message Security Association mit dem ausgewählten kryptographischen Verfahren auf seiner Seite. Weiter erstellt der Home Agent einen Registration Reply, der Informationen (einen Hinweis) über das von ihm ausgewählte Verfahren enthält, schützt diesen ihn mit dem ausgewählten weiteren gemeinsamen Verfahren und schickt den Registration Reply an die Mobile Node. Falls keine anderen Fehler aufgetreten sind, zeigt der Registration Reply zudem an, dass die Registration erfolgreich war.

In Schritt 32 entnimmt die Mobile Node dem Registration Reply das von dem Home Agent ausgewählte weitere gemeinsame kryptographische Verfahren und prüft damit die Authentizität des Registratiön Replys.

In der Abfrage von Schritt 40 prüft die Mobile Node, ob der Registration Reply eine erfolgreiche Registration anzeigt.

Falls die Registration nicht erfolgreich war, so versucht die Mobile Node sich erneut zu registrieren. In Schritt 41 kann sie Fehlerursachen, die sie z.B. aus dem Fehlercode des Registration Replys entnimmt, korrigieren. Sollte beispielsweise beim Vereinbaren des kryptographischen Verfahrens ein Fehler aufgetreten sein, so kann die Mobile Node in dem nächsten Registration Request eine andere Liste kryptographischer Verfahren vorschlagen. Eine Zurückweisung kann auch aufgrund anderer, von der Mobile Node nicht beeinflussbarer Fehler, wie z.B. einer zu langen Laufzeit des Registration Replys oder zu vielen bereits registrierten Mobile Nodes, erfolgen. In diesem Fall sind keine Korrekturen erforderlich. Der erneute Registrationsversuch würde wieder mit Schritt 2 anfangen.

Die Abfrage in Schritt 50 wird erreicht, wenn der Registration Reply anzeigt, dass die Registration erfolgreich war. In der Abfrage 50 wird entschieden, ob der Home Agent der Mobile Node die Benutzung des weiteren gemeinsamen kryptographischen Verfahrens vorgibt.

Falls der Home Agent der Mobile Node die Benutzung des von ihm ausgewählten, weiteren gemeinsam unterstützten kryptographischen Verfahrens nicht vorschreibt, so kann die Mobile Node in Schritt 51 selber ein weiteres gemeinsam unterstütztes kryptographisches Verfahren bestimmen. Die Mobile Node vervollständigt dann die Message Security Association auf ihrer Seite mit dem von ihr ausgewählten kryptographischen Verfahren. Auf diese Weise ist es möglich, dass der Home Agent und die Mobile Node zur Authentifizierung ihrer Nachrichten unterschiedliche kryptographische Verfahren benutzen, wobei die von beiden Seiten ausgewählten kryptographischen Verfahren jeweils sowohl von dem Home Agent als auch der Mobile Node unterstützt werden müssen.

Falls der Home Agent der Mobile Node die Benutzung des weiteren gemeinsamen kryptographischen Verfahrens vorschreibt, so vervollständigt die Mobile Node in Schritt 60 die Message Security Association auf ihrer Seite mit dem vom Home Agent ausgewählten kryptographischen Verfahren. In der Praxis benutzen sowohl Home Agent als auch Mobile Node das gleiche kryptographische Verfahren für ihre Message Security Association.

Nachdem nun die Message Security Associations zwischen Mobile Node und Home Agent aufgebaut sind, kann optional in Schritt 61 eine sofortige, mit den aufgebauten Message Security Associations geschützte, erneute Registration erfolgen, um zu prüfen, ob die Message Security Associations auf beiden Seiten erfolgreich aufgebaut wurden.

Im Gegensatz zu bekannten Aushandlungsverfahren, wie z.B. der Security Mechanism Agreement Procedure des Session Initiation Protocol SIP in RFC 3329 ist es bei dem erfindungsgemäßem Verfahren weder notwendig, die Informationen über die von der Mobile Node unterstützten kryptographischen Verfahren, noch die Informationen über die von dem Home Agent unterstützten kryptographischen Verfahren erneut zu senden, da der Registration Request und der Registration Reply bereits authentizitätsgesichert waren und somit eine Manipulation ausgeschlossen werden kann. Die Vereinbarung der gemeinsam unterstützten kryptographischen Verfahren erfolgt somit mit nur insgesamt zwei Nachrichten, eine vom Mobile Node an den Home Agent und eine von dem Home Agent an die Mobile Node.

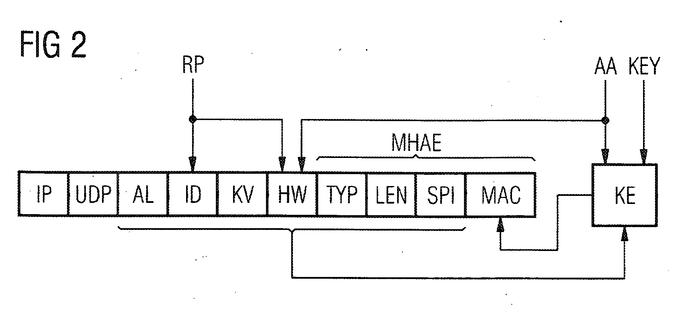

Figur 2 zeigt ein Ausführungsbeispiel für die Felder eines Registration Requests, wie er für das erfindungsgemäße Verfahren eingesetzt werden kann. Der Registration Request weist einen IP-Header IP, einen UDP-Header UDP und Mobile-IP-Felder auf. In dem IP-Header sind die IP Source-Adresse, die IP Destination-Adresse und die IP Lebensdauer enthalten. Der UDP (User Datagram Protocol)-Header enthält den Source-Port und den Destination-Port. Die Mobile-IP-Felder bestehen aus den Feldern AL und ID mit fester Länge und einer Extension.

Das Feld AL enthält allgemeine Informationen des Registration Requests, wie Typ, Lebensdauer, IP-Adresse der Mobile Node, IP-Adresse des Home Agents und Care of Adresse. In dem ID-Feld sind Identifikatoren enthalten, mit denen Registration Replys den zugehörigen Registration Requests zugeordnet werden können und in die auch Informationen zur Replay Protection RP eingehen.

Die Extension enthalt eine Mobile Home Authentication Extension MHAE und die neuen Felder KV, mit den von der Mobile Node unterstützten kryptographischen Verfahren, und HW, mit den Hinweisen über die kryptographischen Verfahren, die eingesetzt werden, um die Authentizität des aktuellen Registration Requests zu schützen.

Die Mobile Home Authentication Extension MHAE enthält den Typ TYP, die Länge LEN der Extension und den Security Parameter Index SPI, sowie den Message Authentification Code MAC. Der Message Authentification Code MAC wird in einer kryptographischen Einheit KE mittels dem gewählten Authentifizierungsalgorithmus AA und dem symmetrischen Schlüssel KEY, der nur der Mobile Node und dem Home Agent bekannt ist, über die Felder AL, ID, KV, HW, TYP, LEN und SPI berechnet wird. Wird auch nur eines dieser Felder verändert, so berechnet der Empfänger einen anderen Message Authentification Code und kann durch Vergleich mit dem übertragenen Message Authentification Code MAC die Manipulation erkennen. Der Registration Request wird im Klartext übermittelt, so dass der Home Agent die von der Mobile Node unterstützten kryptographischen Verfahren KV und die Hinweise HW lesen kann.

Ein Registration Reply für das erfindungsgemäße Verfahren wäre dem in Figur 2 gezeigten Registration Request ähnlich und würde ebenfalls die neuen Felder KV und HW enthalten.

## Patentansprüche

1. Verfahren zum Sichern der Authentizität von Nachrichten, die zwischen einer Mobile Node und einem Home Agent gemäß einem Mobile Internet Protokoll ausgetauscht werden, wobei die zum Sichern der Authentizität der Nachrichten eingesetzten kryptographischen Verfahren zwischen der Mobile Node und dem Home Agent vereinbart werden, indem
- die Mobile Node einen Registration Request erstellt, der die von der Mobile Node unterstützten kryptographischen Verfahren enthält,
- die Mobile Node die Authentizität des Registration Requests mit Hilfe eines ersten kryptographischen Verfahren sichert,
- die Mobile Node den authentizitätsgesichetten Registration Request an den Home Agent sendet,
- der Home Agent die Authentizität des Registration Requests überprüft, und
- falls der Home Agent die Authentizität des Registration Requests feststellt, der Home Agent ein weiteres, von der Mobile Node und dem Home Agent gemeinsam unterstütztes kryptographisches Verfahren auswählt.

2. Verfahren nach Anspruch 1,
**dadurch gekennzeichnet, dass**
falls der Home Agent den Registration Requests für nicht authentisch befindet, der Home Agent einen Registration Reply an die Mobile Node sendet, in welchem der Registration Request zurückgewiesen wird.

3. Verfahren nach Anspruch 1,
**dadurch gekennzeichnet, dass**
falls der Home Agent die Authentizität des Registration Requests feststellt, der Home Agent einen Registration Reply an die Mobile Node sendet, in welchem er der Mobile Node die Auswahl des weiteren, gemeinsam unterstützten kryptographischen Verfahrens mitteilt.

4. Verfahren nach Anspruch 3,
**dadurch gekennzeichnet, dass**
der Registration Reply Information über die von dem Home Agent unterstützten kryptographischen Verfahren enthält.

5. Verfahren nach Anspruch 3 oder 4,
**dadurch gekennzeichnet, dass**
die Authentizität des Registration Replys von dem Home Agent mit Hilfe des ausgewählten kryptographischen Verfahrens gesichert wird.

6. Verfahren nach Anspruch 5,
**dadurch gekennzeichnet, dass**
die Mobile Node die Authentizität des Registration Replys prüft.

7. Verfahren nach einem der Ansprüche 3 bis 6,
**dadurch gekennzeichnet, dass**
- der Home Agent die Mobile Node registriert,
- der Registration Reply des Home Agents den Erfolg der Registration der Mobile Node anzeigt, und
- mindestens eine Message Security Association zwischen der Mobile Node und dem Home Agent mit dem ausgewählten kryptographischen Verfahren aufgebaut wird.

8. Verfahren nach Anspruch 3,
**dadurch gekennzeichnet, dass**
falls der Home Agent kein weiteres gemeinsam unterstütztes kryptographisches Verfahren zwischen der Home Agent und der Mobile Node auswählen kann, der Home Agent als weiteres gemeinsames kryptographisches Verfahren das erste Verfahren auswählt.

9. Verfahren nach Anspruch 8,
**dadurch gekennzeichnet, dass**
- die Mobile Node ein weiteres gemeinsam von der Mobile Node und dem Home Agent unterstütztes kryptographisches Verfahren anhand der Informationen im Registration Reply auswählt, und
- die Mobile Node mindestens eine Message Security Association mit dem ausgewählten Verfahren zwischen der Mobile Node und dem Home Agent aufbaut.

10. Verfahren nach einem der vorigen Ansprüche,
**dadurch gekennzeichnet, dass**
das weitere, von der Mobile Node und dem Home Agent gemeinsam unterstützte kryptographische Verfahren zum Sichern der Authentizität des weiteren Nachrichtenaustauschs zwischen der Mobile Node und dem Home Agent von diesen eingesetzt wird.

11. Verfahren nach einem der vorigen Ansprüche,
dadurch die gekennzeichnet, dass
das erste und die weiteren kryptographischen Verfahren Message Authentication Codes und Replay Protection Styles umfassen.

12. Verfahren nach einem der vorigen Ansprüche,
**dadurch gekennzeichnet, dass**
der Registration Request und/oder der Registration Reply im Klartext übertragen werden.

13. Verfahren nach Anspruch 12,
**dadurch gekennzeichnet, dass**
der Registration Request und/oder der Registration Reply einen Hinweis über das erste kryptographische und/oder die weiteren gemeinsam unterstützten Verfahren enthalten.

14. Verfahren nach einem der vorigen Ansprüche,
**dadurch gekennzeichnet, dass**
das erste kryptographische Verfahren aus vorhergehendem Datenaustausch zwischen der Mobile Node und dem Home Agent bekannt ist.

15. Verfahren nach einem der vorigen Ansprüche,
**dadurch gekennzeichnet, dass**
die Mobile Node und der Home Agent über einen, gemeinsamen geheimen Schlüssel verfügen.

16. Verfahren nach einem der vorigen Ansprüche,
**dadurch gekennzeichnet, dass**
anstelle einer Mobile Node ein Foreign Agent mit dem Home Agent Nachrichten austauscht.

17. Verfahren nach einem der Ansprüche 1 bis 15,
**dadurch gekennzeichnet, dass**
anstelle eines Home Agents ein Foreign Agent mit der Mobile Node Nachrichten austauscht.

## Claims

1. Method for verifying the authenticity of messages exchanged between a mobile node and a home agent in accordance with a mobile Internet Protocol, with the cryptographic method used for verifying the authenticity of the messages being agreed between the mobile node and the home agent, in that
- the mobile node creates a registration request containing the cryptographic methods supported by the mobile node,
- the mobile node verifies the authenticity of the registration request with the aid of a first cryptographic method,
- the mobile node sends the authenticated registration request to the home agent,
- the home agent checks the authenticity of the registration request, and
- if the home agent establishes the authenticity of the registration request, the home agent selects a further cryptographic method mutually supported by the mobile node and the home agent.

2. Method according to claim 1,
**characterised in that**,
if the home agent finds that the registration request is not authentic, the home agent sends a registration reply to the mobile node in which the registration request is rejected.

3. Method according to claim 1,
**characterised in that**,
if the home agent establishes the authenticity of the registration request, the home agent sends a registration reply to the mobile node in which it notifies the mobile node about the selection of the further mutually-supported cryptographic method.

4. Method according to claim 3,
**characterised in that**,
the registration reply contains information about the cryptographic methods supported by the home agent.

5. Method according to claim 3 or 4,
**characterised in that**,
the authenticity of the registration reply is verified by the home agent with the aid of the selected cryptographic method.

6. Method according to claim 5,
**characterised in that**,
the mobile node tests the authenticity of the registration reply.

7. Method according to one of the claims 3 to 6, **characterised in that**,
- the home agent registers the mobile node,
- the registration reply of the home agent indicates the success of the registration of the mobile node, and
- at least one message security association is set up between the mobile node and the home agent with the selected cryptographic method.

8. Method according to claim 3,
**characterised in that**,
if the home agent can select further mutually-supported cryptographic methods between the home agent and the mobile node, the home agent selects the first method as the further mutually-supported cryptographic method.

9. Method according to claim 8,
**characterised in that**,
- the mobile node selects a further cryptographic method mutually supported by the mobile node and the home agent on the basis of the information in the registration reply, and
- the mobile node sets up at least one message security association with the selected method between the mobile node and the home agent.

10. Method according to one of the preceding claims,
**characterised in that**,
the further cryptographic method mutually supported by the mobile node and the home agent is used by the latter to verify the authenticity of the further message exchange between the mobile node and the home agent.

11. Method according to one of the preceding claims,
**characterised in that**
the first and the further cryptographic methods include message authentication codes and replay protection styles.

12. Method according to one of the preceding claims,
**characterised in that**,
the registration request and/or the registration reply are transmitted in plain text.

13. Method according to claim 12,
**characterised in that**,
the registration request and/or the registration reply contain a notification about the first cryptographic and/or the further mutually-supported methods.

14. Method according to one of the preceding claims,
**characterised in that**,
the first cryptographic method is known from the preceding data exchange between the mobile node and the home agent.

15. Method according to one of the preceding claims,
**characterised in that**,
the mobile node and the home agent both have a common secret key.

16. Method according to one of the preceding claims,
**characterised in that**,
instead of a mobile node, a foreign agent exchanges messages with the home agent.

17. Method according to one of the claims 1 to 15,
**characterised in that**,
instead of a home agent, a foreign agent exchanges messages with the mobile node.

## Revendications

1. Procédé pour garantir l'authenticité de messages échangés selon un protocole internet mobile entre un Mobile Node et un Home Agent, les procédés cryptographiques utilisés pour garantir l'authenticité des messages étant convenus entre le Mobile Node et le Home Agent comme suit :
- le Mobile Node crée une demande d'enregistrement qui contient les procédés cryptographiques supportés par le Mobile Node ;
- le Mobile Node garantit l'authenticité de la demande d'enregistrement à l'aide d'un premier procédé cryptographique ;
- le Mobile Node envoie au home agent la demande d'enregistrement dont l'authenticité est garantie ; et
- le Home Agent vérifie l'authenticité des demandes d'enregistrement ;
- si le Home Agent constate l'authenticité de la demande d'enregistrement, le Home Agent sélectionne un autre procédé cryptographique supporté en commun par le Mobile Node et le Home Agent.

2. Procédé selon la revendication 1, **caractérisé en ce que**, si le Home Agent estime que la demande d'enregistrement n'est pas authentique, le Home Agent envoie au mobile node une réponse à la demande d'enregistrement dans laquelle la demande d'enregistrement est refusée.

3. Procédé selon la revendication 1, **caractérisé en ce que**, si le Home Agent constate l'authenticité de la demande d'enregistrement, le Home Agent envoie au Mobile Node une réponse à la demande d'enregistrement dans laquelle il communique au Mobile Node le choix de l'autre procédé cryptographique supporté en commun.

4. Procédé selon la revendication 3, **caractérisé en ce que** la réponse à la demande d'enregistrement contient une information sur les procédés cryptographiques supportés par le Home Agent.

5. Procédé selon la revendication 3 ou 4, **caractérisé en ce que** l'authenticité de la réponse à la demande d'enregistrement est garantie par le Home Agent à l'aide du procédé cryptographique choisi.

6. Procédé selon la revendication 5, **caractérisé en ce que** le Mobile Node vérifie l'authenticité de la réponse à la demande d'enregistrement.

7. Procédé selon l'une des revendications 3 à 6, **caractérisé en ce que** :
- le Home Agent enregistre le Mobile Node ;
- la réponse du Home Agent à la demande d'enregistrement indique la réussite de l'enregistrement du Mobile Node; et
- au moins une association de sécurité de message est établie entre le Mobile Node et le Home Agent au moyen du procédé cryptographique choisi.

8. Procédé selon la revendication 3, **caractérisé en ce que**, si le Home Agent ne peut pas choisir d'autre procédé cryptographique supporté en commun entre le Home Agent et le Mobile Node, le Home Agent choisit le premier procédé en tant qu'autre procédé cryptographique commun.

9. Procédé selon la revendication 8, **caractérisé en ce que** :
- le Mobile Node choisit un autre procédé cryptographique supporté en commun par le Mobile Node et le Home Agent à l'aide des informations de la réponse à la demande d'enregistrement ; et
- le Mobile Node établit au moins une association de sécurité de message entre le Mobile Node et le Home Agent au moyen du procédé choisi.

10. Procédé selon l'une des revendications précédentes, **caractérisé en ce que** l'autre procédé cryptographique supporté en commun par le Mobile Node et le home agent est utilisé par le Mobile Node et le Home Agent pour garantir l'authenticité de la suite de l'échange de messages entre ceux-ci.

11. Procédé selon l'une des revendications précédentes, **caractérisé en ce que** le premier procédé cryptographique et les autres procédés cryptographiques comprennent des codes d'authentification de messages et des Replay Protection Styles.

12. Procédé selon l'une des revendications précédentes, **caractérisé en ce que** la demande d'enregistrement et/ou la réponse à la demande d'enregistrement sont transmises en texte clair.

13. Procédé selon la revendication 12, **caractérisé en ce que** la demande d'enregistrement et/ou la réponse à la demande d'enregistrement contiennent une référence au premier procédé cryptographique et/ou aux autres procédés supportés en commun.

14. Procédé selon l'une des revendications précédentes, **caractérisé en ce que** le premier procédé cryptographique est connu d'un échange de données précédent entre le Mobile Node et le Home Agent.

15. Procédé selon l'une des revendications précédentes, **caractérisé en ce que** le Mobile Node et le Home Agent disposent d'une clé secrète commune.

16. Procédé selon l'une des revendications précédentes, **caractérisé en ce qu'**au lieu d'un Mobile Node, un Foreign Agent échange des messages avec le Home Agent.

17. Procédé selon l'une des revendications 1 à 15, **caractérisé en ce qu'**au lieu d'un Home Agent, un Foreign Agent échange des messages avec le Home Agent.
